# EUROPÄISCHE PATENTSCHRIFT

(11) **EP 1 294 788 B1**
(45) Veröffentlichungstag und Bekanntmachung des Hinweises auf die Patenterteilung: **07.06.2006**
(21) Anmeldenummer: 01960388.5
(22) Anmeldetag: 26.06.2001
(51) Int. Cl.: C08G 18/78, C08G 18/81, C09D 175/16

(54) **HÄRTBARE WÄSSRIGE POLYURETHANDISPERSIONEN**
CURABLE AQUEOUS POLYURETHANE DISPERSIONS
DISPERSIONS DE POLYURETHANNE AQUEUSES DURCISSABLES

(30) Priorität: 27.06.2000 DE 10031258
(43) Veröffentlichungstag der Anmeldung: 26.03.2003
(73) Patentinhaber: BASF Aktiengesellschaft, 67056 Ludwigshafen (DE)
(72) Erfinder: SCHWALM, Reinhold, 67157 Wachenheim (DE); BRUCHMANN, Bernd, 67251 Freinsheim (DE); VÖLLINGER, Frank, 67480 Edenkoben (DE); BECK, Erich, 68526 Ladenburg (DE); SCHROF, Wolfgang, 67271 Neuleiningen (DE); MEISENBURG, Uwe, 47051 Duisburg (DE)
(74) Vertreter: Pohl, Michael Friedrich
(86) Internationale Anmeldenummer: PCT/EP2001/007245
(87) Internationale Veröffentlichungsnummer: WO 2002/000754

(56) Entgegenhaltungen:
- DE-A- 19 947 054
- US-A- 5 596 065
- US-A- 5 767 220

## Beschreibung

Die vorliegende Erfindung betrifft mit UV-Strahlung und thermisch härtbare Polyurethandispersionen, ein Verfahren zu deren Herstellung und deren Verwendung.

Strahlenhärtbare Polyurethandispersionen sind z. B. aus der DE-A-44 34 554 bekannt und werden aus Polyisocyanaten, hydroxylgruppenhaltigen Polyestern, Verbindungen mit einer gegenüber Isocyanaten reaktiven Gruppe und einer Säuregruppe und Verbindungen mit einer gegenüber Isocyanaten reaktiven Gruppe und C=C-Doppelbindungen hergestellt. Die Produkte lassen jedoch bzgl. ihrer Verarbeitbarkeit noch Wünsche offen.

Die US 5,859,135 beschreibt wässrige Beschichtungsmischungen mit einem lipophilen Polymeren mit mindestens einer Hydroxylgruppe und einem Molekulargewicht von bis zu 100000, das einerseits mit einer vernetzbaren funktionellen Gruppe, andererseits über ein Polyisocyanat mit einer Gruppierung mit Carboxylgruppen sowie mit einem hydrophilen Polyalkylenoxidmonoether-Rest verbunden ist. Nachteilig ist, dass damit hergestellte Beschichtungen auch nach der Verarbeitung eine relativ hohe eigene Hydrophilie aufweisen.

Die US 5,296,529 beschreibt ein selbstvernetzendes Harz mit Carboxylgruppen, Hydroxylgruppen und verkappten Isocyanatgruppen, das aus a) einem Copolymerisat eines vinylmonomeren mit freien und verkappten Isocyanatgruppen mit einem Styrol- und/oder (Meth)acrylat-Comonomeren und b) einem Hydroxylgruppen und Carboxylgruppen enthaltenden Polyesterharz hergestellt wird, wobei einige Hydroxylgruppen des Polyesterharzes mit einigen freien Isocyanatgruppen des vinylcopolymerisats umgesetzt und danach restliche Isocyanatgruppen verkappt werden. Es ist ersichtlich, dass einer gut reproduzierbaren Produktion des Systems das Risiko einer vorzeitigen ungewünschten Vernetzung der beiden Polymeren entgegensteht. Auch enthält das beschriebene System keine mit UV-Strahlung härtbaren Doppelbindungen und beschreibt auch keine Strahlenhärtung derselben.

Die deutsche Patentanmeldung P 199 47 054.5 beschreibt mit UV-Strahlung sowie thermisch härtbare Polyurethandispersionen auf Basis von aliphatischen Polyisocyanaten, wobei es sich auch um Allophanatgruppen aufweisende Polyisocyanate handeln kann. Diese Dispersionen enthalten zwingend mit einem Isocyanat-Blockierungsmittel verkappte Isocyanatgruppen.

Die DE-A-198 60 041 beschreibt Umsetzungsprodukte von a) Polyisocyanaten und b) niedrigmolekularen Hydroxylverbindungen mit C=C-Doppelbindungen wie Hydroxyalkyl(meth)acrylaten oder Hydroxyalkylvinylethern, die zum größten Teil Allophanate der Polyisocyanate mit den ungesättigten Alkoholen darstellen. Die niedrigmolekularen und niedrigviskosen Reaktionsprodukte weisen im Molekül einen hohen Gehalt an polymerisierbaren C=C-Doppelbindungen auf und lassen sich sowohl mit UV-Strahlen als auch unter Mitwirkung der Isocyanatgruppen, z. B. durch Einwirkung von wasserdampf, Ammoniak oder Aminen, härten. Eine Anwendung in Form von wässrigen Dispersionen ist nicht beschrieben.

Der vorliegenden Erfindung liegt die Aufgabe zugrunde, thermisch und auch mit UV-Strahlung härtbare wässrige Polyurethandispersionen zur verfügung zu stellen. Diese sollen Beschichtungen mit guten anwendungstechnischen Eigenschaften, wie mit guter Chemikalienfestigkeit und guten mechanischen Eigenschaften ergeben, insbesondere eine hohe Kratzfestigkeit aufweisen und nach der Behandlung auch an unbelichteten Stellen physikalisch trocknen und für Außenanwendungen wie für eine Automobillackierung geeignet sein.

Überraschenderweise wurde nun gefunden, dass die Aufgabe gelöst wird durch härtbare wässrige Polyurethandispersionen aus
a) wenigstens einer Verbindung mit mindestens zwei freien Isocyanatgruppen, mindestens einer Allophanatgruppe und mindestens einer radikalisch polymerisierbaren C=C-Doppelbindung, wobei direkt an die Doppelbindung eine Carbonylgruppe oder ein Sauerstoffatom in Etherfunktion gebunden ist,
b) wenigstens einer Verbindung mit mindestens einer gegenüber Isocyanatgruppen reaktiven Gruppe und einer radikalisch polymerisierbaren C=C-Doppelbindung,
c) gegebenenfalls wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
d) wenigstens einer Verbindung mit mindestens einer gegenüber Isocyanatgruppen reaktiven Gruppe und mindestens einer Säuregruppe,
e) mindestens einer basischen Verbindung für eine Neutralisation oder Teilneutralisation der Säuregruppen der Verbindungen d),
f) gegebenenfalls wenigstens einer von b), d) und e) verschiedenen Verbindung, die nur eine gegenüber Isocyanatgruppen reaktive Gruppe aufweist,
g) gegebenenfalls wenigstens einem von a) verschiedenen Polyisocyanat,
h) wenigstens einem thermischen Initiator,
i) gegebenenfalls weiteren Zusatzstoffen, die ausgewählt sind unter Reaktivverdünnern, Photoinitiatoren und üblichen Lackzusatzstoffen, und
k) Wasser.

In den erfindungsgemäßen Dispersionen werden keine Isocyanatgruppen-haltigen Verbindungen eingesetzt, bei denen die Isocyanatgruppen teilweise oder vollständig mit sogenannten Blockierungsmitteln umgesetzt wurden. Unter Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche erfindungsgemäß nicht eingesetzten Verbindungen mit blockierten Isocyanatgruppen kommen üblicherweise in Dual-Cure-Beschichtungsmitteln zur Anwendung, die über Isocyanatgruppenhärtung endgehärtet werden.

Bevorzugt weisen die erfindungsgemäßen Polyurethandispersionen nach ihrer Herstellung im Wesentlichen keine freien Isocyanatgruppen mehr auf.

### Komponente a)

Die erfindungsgemäßen Verbindungen der Komponente a) sind vorzugsweise im Wesentlichen frei von Urethdion-, Biureth- oder Isocyanuratgruppen.

Vorzugsweise ist die Komponente a) ausgewählt unter Verbindungen der allgemeinen Formel I 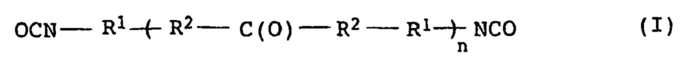 worin
- n: für eine ganze Zahl von 1 bis 10 steht,
- R¹: für eine zweiwertige aliphatische oder alicyclische C₂- bis C₂₀-Kohlenwasserstoffeinheit oder eine aromatische C₆- bis C₂₀-Kohlenwasserstoffeinheit steht,
- R²: in jeder Wiederholungseinheit einmal für -NH- und einmal für 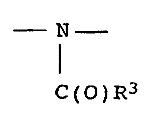 steht, wobei R³ für einen von einem Alkohol A durch Abstraktion des H-Atoms von der alkoholischen Hydroxylgruppe abgeleiteten Rest steht, wobei der Alkohol A zusätzlich wenigstens eine radikalisch polymerisierbare C=C-Doppelbindung aufweist und wobei direkt an die Doppelbindung eine Carbonylgruppe oder ein Sauerstoffatom in Etherbindung gebunden ist.

Bei den Resten R¹ handelt es sich bevorzugt um solche, die sich durch Abstraktion der Isocyanatgruppe von üblichen aliphatischen oder aromatischen Polyisocyanaten ableiten. Bei den Diisocyanaten handelt es sich bevorzugt um aliphatische Isocyanate mit 4 bis 20 C-Atomen. Beispiele für übliche Diisocyanate sind aliphatische Diisocyanate wie Tetramethylendiisocyanat, Hexylmethylendiisocyanat, Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, cycloaliphatische Diisocyanate wie 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan, 2,4-, und 2,6-Diioscyanato-1-methylcyclohexan sowie aromatische Diisocyanate wie 2,4- oder 2,6-Toluylendiisocyanat, m- oder p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'Diisocyanato-3,3'-dimethyldiphenyldiisocyanat, 3-Methyldiphenylmethan-4,4'-diisocyanat und Diphenylether-4,4'-diisocyanat. Es können Gemische der genannten Diisocyanate vorliegen. Bevorzugt sind Hexamethylendiisocyanat, 1,3-Bis(isocyanatomethyl)cyclohexan, Isophorondiisocyanat, Tetramethylxylylendiisocyanat und Di(isocyanatocyclohexyl)methan.

Bei den Alkoholen A, von denen sich der Rest R³ ableitet, handelt es sich z. B. um Ester aus α,β-ungesättigten Carbonsäuren, wie Acrylsäure, Methacrylsäure (im folgenden kurz "(Meth)Acrylsäure"), Crotonsäure, Acrylamidglykolsäure, Methacrylamidoglykolsäure oder Vinylessigsäure und Polyolen mit vorzugsweise 2 bis 20 C-Atomen und wenigstens 2 Hydroxylgruppen, wie Ethylenglykol, Diethylenglykol, Triethylenglykol, 1,2-Propylenglykol, 1,3-Propylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethyloethan, Trimethylolpropan, Trimethylolbutan, Pentaerythrit, Ditrimethylolpropan, Erythrit und Sorbit, sofern der Ester wenigstens eine, gegenüber Isocyanat reaktive OH-Gruppe aufweist. Weiterhin können sich die Reste R³ auch von den Amiden der (Meth)Acrylsäure mit Aminoalkoholen z. B. 2-Aminoethanol, 3-Amino-1-propanol, 1-Amino-2-propanol oder 2-(2-Aminoethoxy)ethanol und den vinylethern der vorgenannten Polyole ableiten, sofern sie noch eine freie OH-Gruppe aufweisen.

Weiterhin sind auch ungesättigte Polyether- oder Polyesterole oder Polyacrylatpolyole mit einer mittleren OH-Funktionalität von 2 bis 10 als Reaktivkomponenten geeignet.

Bevorzugt leiten sich die Reste R³ von Alkoholen wie 2-Hydroxyethyl(meth)acrylat, Hydroxypropyl(meth)acrylat, 1,4-Butandiolmono(meth)acrylat, Neopentylglykolmono(meth)acrylat, Glycerinmono- und -di(meth)acrylat, Trimethylolpropanmono- und -di(meth)acrylat, Pentaerythritdi- und -tri(meth)acrylat ab. Besonders bevorzugt ist der Alkohol A ausgewählt aus 2-Hydroxyethylacrylat, 2-Hydroxyethylmethacrylat, Hydroxypropyl(meth)acrylat. Beispiele für Amide ethylenisch ungesättigter Carbonsäuren mit Aminoalkoholen sind Hydroxyalkyl(meth)acrylamide wie N-Hydroxymethyl(meth)acrylamid, N-Hydroxyethyl(meth)acrylamid, 5-Hydroxy-3-oxo-pentyl(meth)acrylamid, N-Hydroxyalkylcrotonamide wie N-Hydroxymethylcrotonamid oder N-Hydroxyalkylmaleinimide wie N-Hydroxyethylmaleinimid.

### Komponente b)

Die Verbindungen der Komponente b) weisen eine radikalische polymerisierbare C=C-Doppelbindung sowie mindestens eine weitere gegenüber Isocyanatgruppen reaktive Gruppe auf. Bevorzugte Verbindungen der Komponenten b) sind z. B. die Monoester zwei- oder mehrwertiger Alkohole mit α,β-ethylenisch ungesättigen Mono- und/oder Dicarbonsäuren und deren Anhydriden. Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure eingesetzt. Geeignete Alkohole sind z. B. Diole wie Glykole, bevorzugt Glykole mit 2 bis zu 25 Kohlenstoffatomen, wie z. B. 1,2-Ethandiol, 1,3-Propandiol, 1,4-Butandiol, 1,3-Butandiol, 1,5-Pentandiol, , 1,4-Pentandiol, 1,6-Hexandiol, 1,10-Decandiol, Diethylenglykol, etc. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit etc. Vorzugsweise sind die Verbindungen der Komponente b) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono-acrylat und Mischungen davon. Gewünschtenfalls können diese Verbindungen auch noch durch Umsetzung mit einem geeigneten Kettenverlängerer, wie z. B. einem mehrfunktionellen Isocyanat oder einer mehrfunktionellen Carbonsäure kettenverlängert sein.

Geeignete Verbindungen b) sind weiterhin die Ester und Amide von Aminoalkoholen mit den zuvor genannten α,β-ethylenisch ungesättigten Mono- und/oder Dicarbonsäuren, Hydroxyalkylvinylether wie Hydroxybutylvinylether etc.

### Komponente c)

Geeignete Verbindungen c) sind sowohl niedermolekulare Alkohole als auch polymere Polyole. Bevorzugt sind niedermolekulare Alkohole mit einem Molekulargewicht von höchstens 500 g/mol. Besonders bevorzugt sind Alkohole mit 2 bis 20 Kohlenstoffatomen und 2 bis 6 Hydroxylgruppen wie z. B. die zuvor genannten Glykole. Bevorzugt sind insbesondere hydrolysestabile kurzkettige Diole mit 4 bis 20, bevorzugt 6 bis 12 Kohlenstoffatomen. Dazu zählen vorzugsweise Dihydroxymethylcyclohexan, Bis(hydroxycyclohexyl)-propan, Tetramethylcyclobutandiol, Cyclooctandiol oder Norbornandiol. Besonders bevorzugt werden aliphatische Kohlenwasserstoffdiole, wie die isomeren Butandiole, Pentandiole, Hexandiole, Heptandiole, Octandiole, Nonandiole, Decandiole, Undecandiole und Dodecandiole eingesetzt. Besonders bevorzugt sind 1,4-Butandiol, 1,4-Pentandiol, 1,5-Pentandiol, 1,6-Hexandiol, 2,5-Hexandiol, Dihydroxymethylcyclohexan, Bis-hydroxycyclohexyl-propan, etc.

Geeignete Verbindungen c) sind weiterhin polymere Polyole. Vorzugsweise liegt das zahlenmittlere Molekulargewicht Mₙ dieser Polymere in einem Bereich von etwa 1000 bis 100.000, besonders bevorzugt 2000 bis 10.000. Die OH-Zahlen liegen vorzugsweise in einem Bereich von etwa 40 bis 200 mg KOH/g Polymer. Bevorzugte Polymere c) sind z. B. Copolymerisate, die wenigstens einen der zuvor genannten Monoester zwei- oder mehrwertiger Alkohole mit wenigstens einer α,β-ethylenisch ungesättigten Mono- und/oder Dicarbonsäure und wenigstens ein weiteres Comonomer, vorzugsweise ausgewählt unter Vinylaromaten, wie z. B. Styrol, Estern der zuvor genannten α,β- ungesättigten Mono- und/oder Dicarbonsäuren mit Monoalkoholen, Vinylestern von bis zu 20 Kohlenstoffatomen enthaltenden Carbonsäuren, Vinylhalogeniden, nicht-aromatischen Kohlenwasserstoffen mit 4 bis 8 Kohlenstoffatomen und 1 oder 2 Doppelbindungen, ungesättigten Nitrilen, etc. und Mischungen davon einpolymerisiert enthalten. Dazu zählen weiterhin (teil)hydrolysierte Vinylester-Polymere, bevorzugt Polyvinylacetate. Dazu zählen weiterhin Polyesterole auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis. Dazu zählen weiterhin Polyetherole, die durch Polymerisation von cyclischen Ethern oder durch Umsetzung von Alkylenoxiden mit einem Startermolekül erhältlich sind, sowie durch Umsetzung von Polyetherolen mit Ammoniak erhältliche α,ω-Diaminopolyether. Dazu zählen weiterhin auch übliche, dem Fachmann bekannte Polycarbonate mit endständigen Hydroxylgruppen, die z. B. durch Umsetzung der zuvor genannten Diole mit Phosgen oder Kohlensäurediestern erhältlich sind.

Die zuvor genannten Komponenten c) können einzeln oder als Gemische eingesetzt werden.

### Komponente d)

vorzugsweise sind die Säuregruppen der Verbindungen der Komponente d) ausgewählt unter Carbonsäuregruppen, Sulfonsäuregruppen, Phosphonsäuregruppen und Phosphorsäuregruppen. Bevorzugt sind Carbonsäure- und Sulfonsäuregruppen.

Als Verbindungen d) mit mindestens einer gegenüber Isocyanat reaktiven Gruppe sowie mindestens einer Carbonsäure- oder Sulfonsäuregruppe kommen insbesondere aliphatische Monomercapto-, Monohydroxy- und Monoamino- und Iminocarbonsäuren und entsprechende Sulfonsäuren in Frage wie Mercaptoessigsäure (Thioglykolsäure), Mercaptopropionsäure, Mercaptobernsteinsäure, Hydroxyessigsäure, Hydroxypropionsäure (Milchsäure), Hydroybernsteinsäure, Hydroxypivalinsäure, Dimethylolpropionsäure, Hydroxydecansäure, Hydroxydodecansäure, 12-Hydroxystearinsäure, Hydroxyethansulfon-säure, Hydroxypropansulfonsäure, Mercaptoethansulfonsäure, Mercaptopropansulfonsäure, Aminopropansulfonsäure, Glycin (Aminoessigsäure) oder Iminodiessigsäure.

### Komponente e)

Als basische Verbindungen e) für eine Neutralisation oder Teilneutralisation der Säuregruppen der Verbindungen d) kommen anorganische und organische Basen wie Alkali- und Erdalkalihydroxide, -oxide, -carbonate, -hydrogencarbonate sowie Ammoniak oder primäre, sekundäre oder tert. Amine in Betracht. Bevorzugt ist die Neutralisation oder Teilneutralisation mit Aminen wie mit Ethanolamin oder Diethanolamin und insbesondere mit tert. Aminen, wie Triethylamin, Triethanolamin, Dimethylethanolamin oder Diethylethanolamin. Die Mengen an eingeführten chemisch gebundenen Säuregruppen und das Ausmaß der Neutralisation der Säuregruppen (das meist bei 40 bis 100 % der Äquivalenzbasis beträgt) soll vorzugsweise hinreichend sein, um eine Dispergierung der Polyurethane in einem wässrigen Medium sicherzustellen, was dem Fachmann geläufig ist.

### Komponente f)

In den erfindungsgemäßen Dispersionen kann als Komponente f) wenigstens eine weitere Verbindung mit einer gegenüber Isocyanatgruppen reaktiven Gruppe eingesetzt werden. Bei dieser Gruppe kann es sich um eine Hydroxyl-, Mercapto-, oder eine primäre oder sekundäre Aminogruppe handeln. Geeignete Verbindungen f) sind die üblichen, dem Fachmann bekannten Verbindungen, die als sogenannte Abstopper zur Herabsetzung der Zahl reaktiver freier Isocyanatgruppen bzw. zur Modifizierung der Polyurethaneigenschaften üblicherweise bei der Polyurethanherstellung eingesetzt werden. Dazu zählen z. B. monofunktionelle Alkohole, wie Methanol, Ethanol, n-Propanol, Isopropanol etc. Geeignete Komponenten f) sind auch Amine mit einer primären oder sekundären Aminogruppe, wie z. B. Methylamin, Ethylamin, n-Propylamin, Diisopropylamin, Dimethylamin, Diethylamin, Di-n-propylamin, Diisopropylamin etc.

### Komponente g)

In den erfindungsgemäßen Dispersionen kann als Komponenten g) wenigstens ein von den Verbindungen der Komponenten a) verschiedenes Polyisocyanat eingesetzt werden. Erfindungsgemäß werden als Komponenten g) keine Polyisocyanate eingesetzt, bei denen die Isocyanatgruppen mit einem Blockierungsmittel umgesetzt wurden.

Bevorzugte Verbindungen g) sind Polyisocyanate mit einer NCO-Funktionalität von 2 bis 4,5, besonders bevorzugt 2 bis 3,5. Bevorzugt werden als Komponente g) aliphatische, cycloaliphatische und araliphatische Diisocyanate eingesetzt. Dazu zählen z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,3- und 1,4-Bis(isocyanatomethyl)cyclohexan, Di(isocyanatocyclohexyl)methan, Tetramethylxylylendiisocyanat und Mischungen davon. Bevorzugt sind Verbindungen g), die neben 2 oder mehreren Isocyanatgruppen noch eine Gruppe, ausgewählt aus der Gruppe der Urethan-, Harnstoff-, Biureth-, Allophanat-, Carbodiimid-, Urethonimin-, Urethdion- und Isocyanuratgruppen aufweisen.

Bevorzugt werden als Komponente g) Isophorondiisocyanat, 1,3- und 1,4-Bis(isocyanatomethyl)cyclohexan, deren Isocyanurate, Biurethe und Allophanate und Mischungen davon eingesetzt.

Enthalten die erfindungsgemäßen Dispersionen neben der Komponente a) noch eine Komponente g), so beträgt der Anteil der Verbindungen der Komponente g) vorzugsweise 0,1 bis 90 Gew.-%, besonders bevorzugt 1 bis 50 Gew.-%, insbesondere 5 bis 30 Gew.-%, bezogen auf die Gesamtmenge der Verbindungen der Komponenten a) und g).

### Komponente h)

Bevorzugte thermische Initiatoren h) sind solche, die eine Halbwertzeit bei 60°C von mindestens einer Stunde, bevorzugt mindestestens 2 Stunden, aufweisen. Die Halbwertszeit eines thermischen Initiators, ist die Zeit, nachdem die Ausgangsmenge des Initiators zur Hälfte in freie Radikale zerfallen ist. Diese Initiatoren ermöglichen im Allgemeinen eine Filmbildung auf einem mit einer erfindungsgemäßen Dispersion beschichteten Substrat nach üblichen Methoden, wie z. B. Ablüften unter Erwärmung, wobei im Wesentlichen noch keine thermische Initiierung und Aushärtung stattfindet.

Bevorzugt wird die Komponente h) in einer Menge von 0,1 bis 10 Gew.-%, bevorzugt 0,5 bis 5 Gew.-%, bezogen auf die Gesamtmenge der Komponenten a) bis i) eingesetzt.

Geeignete Verbindungen h) sind im Allgemeinen sämtliche unter den Härtungsbedingungen in Radikale zerfallende Verbindungen, wie z. B. Peroxide, Hydroperoxide, Wasserstoffperoxid, Persulfate, Azoverbindungen, hochsubstituierte z. B. hexasubstituierte Ethane, Amin-N-oxide, Redoxkatalysatoren etc. Bevorzugt werden wasserlösliche Initiatoren eingesetzt. Geeignete thermische Initiatoren sind z. B. Triphenylmethylazobenzol, Benzoylperoxid, Di-tert.-Butylperoxid, Cumolhydroperoxid, Dicumylperoxid, tert.-Butylperbenzoat, 2,2,6,6-Tetramethylpiperidin-1-yl-oxi, Benzpinakol und dessen Derivate sowie (Arylsulfonyl)essigsäurealkylester, vorzugsweise (Phenylsulfonyl)essigsäuremethylester.

Weiterhin umfaßt die Komponente h) bevorzugt wenigstens einen thermischen Initiator mit mindestens einer gegenüber Isocyanatgruppen reaktiven Gruppe, wobei der Initiator auch nach Umsetzung mit einer Isocyanatgruppen-haltigen Verbindung befähigt ist, thermisch Rakikale freizusetzen. Dazu zählen z. B. Initiatoren, die wenigstens eine Hydroxylgruppe aufweisen, über die sie in das Polymer eingebaut werden können.

Bevorzugt sind hexasubstituierte Ethane, insbesondere Benzpinakol und die Derivate davon, silylierte Pinakole, die z. B. unter dem Handelsnamen ADDID 600 der Firma Wakker kommerziell erhältlich sind oder Hydroxylgruppen-haltige Arnin-N-Oxide, wie 4-Hydroxy-2,2,6,6-Tetramethylpiperidin-1-yloxi (TEMPOL).

### Komponente i)

Die erfindungsgemäße Dispersion kann wenigstens eine weitere Verbindung enthalten, wie sie üblicherweise als Reaktivverdünner eingesetzt wird. Dazu zählen z. B. die Reaktivverdünner, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Bevorzugte Reaktivverdünner sind von der Komponente b) verschiedene Verbindungen, die wenigstens zwei funktionelle Gruppen aufweisen, die ausgewählt sind unter radikalisch polymerisierbaren C=C-Doppelbindungen und gegenüber Isocyanatgruppen reaktiven Gruppen. Dazu zählen insbesondere die Diester und Polyester der zuvorgenannten α, β-ethylenisch ungesättigten Mono- und/oder Dicarbonsäuren mit Diolen oder Polyolen. Besonders bevorzugt sind Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Pentaerythritdiacrylat, Dipentaerythrittetraacrylat, Dipentaerythrittriacrylat, Pentaerythrittetraacrylat, etc. Bevorzugt sind auch die Ester alkoxylierter Polyole, mit α,β-ethylenisch ungesättigten Mono- und/oder Dicarbonsäuren wie z. B. die Polyacrylate oder -methacrylate von alkoxyliertem Trimethylolpropan, Glycerin oder Pentaerythrit. Geeignet sind weiterhin die Ester alicylischer Diole, wie Cyclohexandioldi(meth)acrylat und Bis(hydroxymethylethyl)cyclohexandi(meth)acrylat. Weitere geeignete Reaktiwerdünner sind Trimethylolpropanmonoformalacrylat, Glycerinformalacrylat, 4-Tetrahydropyranylacrylat, 2-Tetrahydropyranylmethacrylat und Tetrahydrofurfurylacrylat.

Sofern die Aushärtung der erfindungsgemäßen Dispersionen nicht nur thermisch sondern auch mittels UV-Strahlung erfolgt, enthalten die erfindungsgemäßen Zubereitungen vorzugsweise wenigstens einen Photoinitiator, der die Polymerisation ethylenisch ungesättigter Doppelbindungen initiieren kann. Hierzu zählen z. B. Benzophenon und Benzophenonderivate, wie 4-Phenylbenzophenon und 4-Chlorbenzophenon, Michlers Keton, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinehter, wie Methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate, wie Methylanthrachinon und tert.-Butylanthrachinon, Acylphophinoxide, wie 2,4,6-Trimethylbenzoyldiphenylphophinoxid, Ethyl-2,4,6-trimethylbenzoylphenylphosphinat, Ethyl-2,4,6-trimethylbenzoylphenalphosphinat und Bisacylphosphinoxide.

Besonders bevorzugt enthalten die erfindungsgemäßen Dispersionen wenigstens einen Photoinitiator, der ausgewählt ist unter Phenylglyoxalsäure und den Estern und Salzen davon. Besonders bevorzugt sind Verbindungen der allgemeinen Formel I

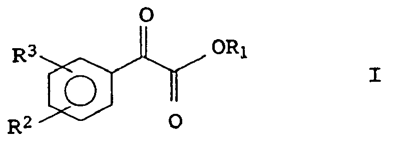

R¹ steht für ein H-Atom oder eine C₁-C₁₈-Alkylgruppe. Bevorzugt steht R¹ für eine C₁ - C₈ Alkylgruppe, insbesondere Methyl-, Ethyl-, Propyl-, Butyl-, Hexyl-.

R² und R³ stehen unabhängig voneinander für ein H-Atom, eine C₁-C₁₈-Alkylgruppe oder eine C₁-C₁₈-Alkoxyguppe.

Bevorzugt stehen R² und R³ unabhängig voneinander für ein H-Atom.

Der Phenylring ist, soweit zumindest einen der beiden Reste R² und R³ kein H-Atom ist, vorzugsweise in para-Stellung (4-Position) zur Carbonylgruppe substituiert.

Besonders bevorzugt sind weiterhin Phenylglyoxalsäureester der Formel I 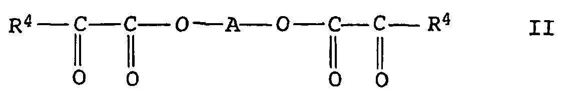 worin die beiden Reste R⁴ unabhängig voneinander für einen Rest der Formel 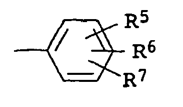 stehen,
R⁵, R⁶ und R⁷ unabhängig voneinander für H, C₁-C₆-Alkyl, das gegebenenfalls durch OH, OC₁-C₆-Alkyl oder OCOC₁-C₆-Alkyl substituiert ist, oder für OH oder OC₁-C₆-Alkyl stehen;
A für C₂-C₆-Alkylen oder einen Rest der Formeln 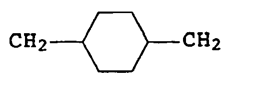 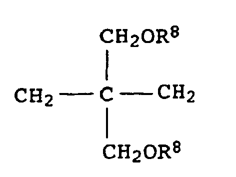 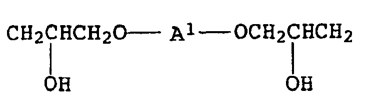 steht,
die Reste R⁸ unabhängig voneinander für H oder COCOR⁴ stehen und A¹ für C₂-C₆-Alkylen oder 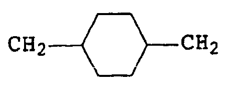 steht.

Derartige Verbindungen sind in der DE-A-198 26 712 und der deutschen Patentanmeldung P-199 13 353.0 beschrieben, worauf hier in vollem Umfang Bezug genommen wird. Vorzugsweise eignen sich die zuvor beschriebenen Photoinitiatoren auf Basis von Phenylglykoxalsäurederivaten für Außenanwendungen, da sie nicht oder wenig vergilben.

Die erfindungsgemäßen Dispersionen enthalten die Photoinitiatoren vorzugsweise in einer Menge von 0,05 bis 10 Gew.-%, besonders bevorzugt 0,1 bis.8 Gew.-%, insbesondere 0,2 bis 5 Gew.-%, bezogen auf die Gesamtmenge der Komponenten a) bis i).

Die erfindungsgemäßen Dispersionen können weitere Lack-übliche Zusatzstoffe, wie Verlaufsmittel, Entschäumer, UV-Absorber, Farbstoffe, Pigmente und/oder Füllstoffe enthalten.

Geeignete Füllstoffe umfassen Silikate, z. B. durch Hydrolyse von Siliciumtetrachlorid erhältliche Silikate wie Aerosil R der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin R-Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

Der Feststoffgehalt der erfindungsgemäßen wässrigen Dispersionen liegt vorzugsweise in einem Bereich von etwa 5 bis 70, insbesondere 20 bis 50 Gew.-%.

Bevorzugt sind Dispersionen, wobei die Isocyanatgruppen der Verbindungen der Komponente a) und, falls vorhanden, g) zu
- 5 bis 98 Mol-%, bevorzugt 10 bis 80 Mol-%, mit gegenüber Isocyanatgruppen reaktiven Gruppen wenigstens einer Verbindung der Komponente b),
- 0 bis 70 Mol-% bevorzugt 20 bis 60 Mol-%, mit gegenüber Isocyanatgruppen reaktiven Gruppen wenigstens einer Verbindung der Komponente c),
- 2 bis 10 Mol-%, bevorzugt 4 bis 8 Mol-%, mit gegenüber Isoocyanatgruppen wenigstens einer Verbindung der Komponente d),
umgesetzt sind.

Die erfindungsgemäßen Dispersionen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Vorteilhafterweise bilden die erfindungsgemäßen Dispersionen nach ausschließlich thermischer Härtung Filme mit guten anwendungstechnischen Eigenschaften, wie eine gute Kratzfähigkeit, gute Chemikalienfestigkeit, gute Witterungsstabilität und/oder gute mechanische Eigenschaften aus. Besonders bevorzugt eignen sie sich jedoch für sogenannte Dual-Cure-Anwendungen, bei denen ein mit mindestens einer erfindungsgemäßen Dispersion beschichteter Gegenstand wenigstens einem Härtungsschritt mit energiereicher Strahlung und wenigstens einem thermischen Härtungsschritt unterzogen wird.

Ein weiterer Gegenstand der Erfindung ist ein Verfahren zur Beschichtung von Gegenständen, wobei man
i) einen Gegenstand mit einer Dispersion, wie zuvor beschrieben, beschichtet,
ii) flüchtige Bestandteile der Dispersion zur Filmbildung unter Bedingungen entfernt, bei denen der thermische Initiator h) im Wesentlichen nach keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Gegenstand in Kontakt bringt,
iv) dem Film thermisch enthärtet

Dabei können die Schritte iv) und iii) auch in umgekehrter Reihenfolge durchgeführt, d. h. der Film zuerst thermisch und dann mit energiereicher Strahlung gehärtet werden.

Die Beschichtung der Substrate erfolgt nach üblichen, dem Fachmann bekannten Verfahren, wobei man wenigstens eine erfindungsgemäße Dispersion auf das zu beschichtende Substrat in der gewünschten Stärke aufbringt und die flüchtigen Bestandteile der Dispersionen entfernt. Dieser Vorgang kann gewünschtenfalls ein- oder mehrfach wiederholt werden. Das Aufbringen auf das Substrat kann in bekannter weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Die Härtung der auf dem Substrat gebildeten Filme kann gewünschtenfalls ausschließlich thermisch erfolgen. Im Allgemeinen härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt durch Einwirkung energiereicher strahlung, also UV-Strahlung oder Tageslicht, vorzugsweise Licht der Wellenlänge 250 bis 600 nm oder durch Bestrahlung mit energiereichen Elektronen (Blektronenstrahlung; 150 bis 300 kev). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der erfindungsgemäßen Dispersionen liegt darin, dass man die beschichteten Gegenstände unmittelbar im Anschluß an die Strahlungshärtung weiterverarbeiten kann, weil die Oberfläche nicht mehr klebt. Andererseits ist der vorgehärtete Film noch so flexibel und dehnbar, dass der Gegenstand noch verformt werden kann, ohne dass der Film dabei abplatzt oder reißt.

Selbst wenn keine Verformung des Gegenstandes vorgesehen ist, kann sich das sogenannte Dual-Cure-Verfahren vorteilhaft erweisen, denn die mit dem vorgehärteten Film versehenen Gegenstände können besonders einfach transportiert und gelagert werden, z. B. in Stapeln. Darüberhinaus bietet das Dual-Cure-Verfahren den Vorteil, dass die Beschichtungsmassen in Dunkelbereichen (Bereiche, die für die Strahlung nicht zugänglich sind) chemisch nachhärten können und somit noch ausreichende Materialeigenschaften unabhängig von der Bestrahlung erreicht werden. Desweiteren härten Spritznebelniederschläge kleb- und emissionsfrei aus.

Ein weiterer Gegenstand der Erfindung ist die Verwendung einer Dispersion, wie zuvor beschrieben, zur Beschichtung von Substraten aus Metall, Holz, Papier, Keramik, Glas, Kunststoff, Textil, Leder, Vlies oder mineralischen Baustoffen.

Besonders bevorzugt eignen sich die erfindungsgemäßen Dispersionen als oder in Außenbeschichtungen, bevorzugt von Gebäuden oder Gebäudeteilen, Straßenmarkierungen, Beschichtungen auf Fahrzeugen und Flugzeugen. Insbesondere werden die erfindungsgemäßen Dispersionen als oder in Automobilklarlack(en) eingesetzt.

Die Erfindung wird anhand der folgenden, nicht einschränkenden Beispiele näher erläutert.

### Beispiele

Soweit nicht anders angegeben, beziehen sich angegebene Teile und Prozente auf das Gewicht.

Die Beurteilung der Kratzfestigkeit erfolgte in einem Scheuertest, bei dem mit einem Scotch-Brite-Gewebe unter einem Gewicht von 750 g 50 Doppelhübe ausgeführt wurden. Der Verkratzungsgrad wurde über die Bestimmung des Glanzabfalls bestimmt.

### Beispiel 1

### 1a) Herstellen eines Allophanats aus Hexamethylendiisocyanat und 2-Hydroxyethylacrylat:

Hexamethylendiisocyanat wurde unter Stickstoffbedeckung mit 40 mol% (bezogen auf das Isocyanat) 2-Hydroxyethylacrylat vermischt und auf auf 80°C erwärmt. Nach Zugabe von 200 Gew.-ppm (bezogen auf Diisocyanat) N,N,N-Trimethyl-N-(2-hydroxypropyl)ammonium-2-ethylhexanoat wurde die Temperatur langsam auf 120°C erhöht und bei dieser Reaktionstemperatur gehalten. Bei einem Isocyanatgehalt der Mischung von 13,5 Gew.-% wurde die Reaktion durch Zugabe von 250 Gew.-ppm Di(2-ethylhexyl)phosphat (bezogen auf Diisocyanat) gestoppt. Das Reaktionsgemisch wurde dann im Dünnschichtverdampfer bei 135 °C und 2,5 mbar von nicht-umgesetztem Hexamethylendiisocyanat befreit. Das Produkt hatte nach der Destillation einen NCO-Gehalt von 13,5 Gew.-% und eine Viskosität von 810 mPas bei 23°C.

### 1b) Herstellen der wässrigen Polyurethandispersion:

In einem Rührkessel wurden 100 Teile des Allophanats aus Beispiel 1a), 12,4 Teile Decandiol, 0,13 Teile 2,6-Di-tert.-Butyl-p.-kresol, 0,1 Teile Hydrochinonmonomethylether und 0,03 Teile Dibutylzinndilaurat vorgelegt. Dann wurden 9,9 Teile Hydroxyethylacrylat zugegeben und die resultierende Mischung 3 Stunden bei 70°C gerührt. Nach Zugabe von 2 Teilen Thioglykolsäure und 1,1 Teilen Methanol wurde weitere 4 Stunden bei 70°C gerührt und der Reaktionsansatz dann abgekühlt. Nach Zugabe von 2,3 Teilen Triethylamin wurde das resultierende Produkt in Wasser dispergiert.

### Beispiel 2

Herstellen einer wässrigen Polyurethandispersion mit eingebautem thermischen Initiator:

Es wurde wie in Beispiel 1 verfahren, wobei der Anteil Methanol durch Benzpinakol ersetzt wurde.

### Herstellen und Testen von Filmen:

Die Dispersionen der Beispiele 1 und 2 wurden ohne Zusatz eines Initiators bzw. nach Zusatz eines thermischen und gegebenenfalls eines Photoinitiators, wie in Tabelle 1 angegeben, auf verschiedene Substrate aufgetragen, so dass Lackfilme mit einer Dicke von ca. 40 µm resultierten. Die Filme wurden über Nacht bei Raumtemperatur abgelüftet und anschließend 15 min bei 60°C getempert.

Zur Beurteilung der rein thermischen Härtung der Formulierung, der ein thermischer Initiator zugesetzt wurde, ist in Tabelle 1 die Kratzfestigkeit nach 30 min Härten im Trockenofen bei 150°C angegeben. Des Weiteren wurden die Filme der Formulierungen, denen zusätzlich ein Photoinitiator zugesetzt wurde, einer Strahlenhärtung auf einem Transportband mit einer Geschwindigkeit von 10 m/min mit zwei UV-Lampen (80 W/cm) und einer anschließenden thermischen Härtung von 30 min im Trockenofen bei 150°C unterzogen. Die Ergebnisse der Kratzbeständigkeitsprüfung sind ebenfalls in Tabelle 1 wiedergegeben.

**Tabelle 1:**

| Dispersionen aus Bsp.-Nr. | Initiator | Kratzbeständigkeit (Glanzabfall / %) |
|---|---|---|
| 1 (Vergleich) | ohne | 90 |
| 1 | 4 Gew.-% t.-Butylpivalat | 46 |
| 1 | 3 Gew.-% Irgacure® I500¹⁾/ | 24 |
| | 5 Gew.-% Benzpinalkol (separat) | |
| 2 | 0,8 Gew.-% Benzpinakol (eingebaut)²⁾ | 40 |
| 2 | 0,8 Gew.-% Benzpinakol (eingebaut) | 32 |
| | 3 Gew.-% Irgacure® | |
| 1 | 3 Gew.-% Irgacure I 500 | 32 |
| | 5 Gew.-% Dibenzoylperoxid | |
| 1 | 3 Gew.-% Irgacure I 500 | 43 |
| | 5 Gew.-% tert.-Butylperbenzoat | |
| 1 | 3 Gew.-% Irgacure I 500 | 32 |
| | 5 Gew.-% (Phenylsulfonyl)essigsäuremethylester | |

| | | |
|---|---|---|
| 1) Mischungen aus 1-Hydroxycyclohexylphenylketon und Benzophenon (Fa. Ciba) | | |
| 2) 1,1 Gew.-Tl bezogen auf Komponenten des Polymer | | |

## Patentansprüche

1. Härtbare wässrige Polyurethandispersion aus
a) wenigstens einer Verbindung mit mindestens zwei freien Isocyanatgruppen, mindestens einer Allophanatgruppe und mindestens einer radikalisch polymerisierbaren C=C-Doppelbindung, wobei direkt an die Doppelbindung eine Carbonylgruppe oder ein Sauerstoffatom in Etherfunktion gebunden ist,
b) wenigstens einer Verbindung mit mindestens einer gegenüber Isocyanatgruppen reaktiven Gruppe und einer radikalisch polymerisierbaren C=C-Doppelbindung,
c) gegebenenfalls wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
d) wenigstens einer Verbindung mit mindestens einer gegenüber Isocyanatgruppen reaktiven Gruppe und mindestens einer Säuregruppe,
e) mindestens einer basischen Verbindung für eine Neutralisation oder Teilneutralisation der Säuregruppen der verbindungen d),
f) gegebenenfalls wenigstens einer von b), d) und e) verschiedenen verbindung, die nur eine gegenüber Isocyanatgruppen reaktive Gruppe aufweist,
9) gegebenenfalls wenigstens einem von a) verschiedenen Polyisocyanat,
h) wenigstens einem thermischen Initiator,
i) gegebenenfalls weiteren Zusatzstoffen, die ausgewählt sind unter Reaktivverdünnern, Photoinitiatoren und üblichen Lackzusatzstoffen, und
k) Wasser,
wobei keine Isocyanatgruppen-haltigen Verbindungen eingesetzt werden, bei denen die Isocyanatgruppen teilweise oder vollständig mit Blockierungsmitteln umgesetzt wurden.

2. Dispersion nach Anspruch 1, wobei die Komponente a) ausgewählt ist unter Verbindungen der allgemeinen Formel I 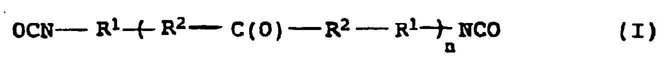 worin
n für eine ganze Zahl von 1 bis 10 steht,
R¹ für eine zweiwertige aliphatische oder alicyclische C₂- bis C₂₀-Kohlenwasserstoffeinheit oder eine aromatische C₆- bis C₂₀-Kohlenwasserstoffeinheit steht,
R² in jeder Wiederholungseinheit einmal für -NH- und einmal für 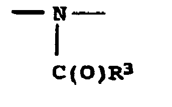 steht, wobei R³ für einen von einem Alkohol A durch Abstraktion des H-Atoms von der alkoholischen Hydroxylgruppe abgeleiteten Rest steht, wobei der Alkohol A zusätzlich wenigstens eine radikalisch polymerisierbare C=C-Doppelbindung aufweist und wobei direkt an die Doppelbindung eine Carbonylgruppe oder ein Sauerstoffatom in Etherbindung gebunden ist.

3. Dispersion nach einem der vorhergehenden Ansprüche, wobei der thermische Initiator h) eine Halbwertszeit bei 60°C von mindestens einer Stunde aufweist.

4. Dispersion nach einem der vorhergehenden Ansprüche, wobei die Komponente h) wenigstens eine Verbindung mit mindestens einer gegenüber Isocyanatgruppen reaktiven Gruppe umfaßt, die auch nach Umsetzung mit einer Isocyanatgruppen-haltigen Verbindung befähigt ist, thermisch Radikale freizusetzen.

5. Dispersion nach einem der vorhergehenden Ansprüche, wobei die Komponente h) Benzpinakol oder ein Derivat davon umfaßt.

6. Dispersion nach einem der vorhergehenden Ansprüche, wobei die Komponente h) einen (Arylsulfonyl)essigsäurealkylester umfaßt.

7. Dispersion nach einem der vorhergehenden Ansprüche, wobei die Isocyanatgruppen der Verbindungen der Komponente a) und, falls vorhanden, g) zu
- 5 bis 98 Mol-%, bevorzugt 10 bis 80 Mol-%, mit gegenüber Isocyanatgruppen reaktiven Gruppen wenigstens einer Verbindung der Komponente b),
- 0 bis 70 Mol-% bevorzugt 20 bis 60 Mol-%, mit gegenüber Isocyanatgruppen reaktiven Gruppen wenigstens einer Verbindung der Komponente c),
- 2 bis 10 Mol-%, bevorzugt 4 bis 9 Mol-%, mit gegenüber-Iseocyanatgruppen reaktiven Gruppen wenigstens einer Verbindung der Komponente d),
umgesetzt sind.

8. Verfahren zur Beschichtung von Gegenständen wobei man
i) einen Gegenstand mit einer Dispersion nach einem der Ansprüche 1 bis 7 beschichtet,
ii) flüchtige Bestandteile der Dispersion zur Filmbildung unter Bedingungen entfernt, bei denen der thermische Initiator h) im wesentlichen noch keine freien Radikale ausbildet,
iii) gegebenenfalls den in schritt ii) gebildeten Film mit energiereicher Strahlung bestrahlt, wobei der Film vor gehärtet wird, und anschließend gegebenenfalls den mit dem vorgehärteten Film beschichteten Gegenstand mechanisch bearbeitet oder die Oberfläche des vorgehärteten Films mit einem anderen Gegenstand in Kontakt bringt,
iv) den Film thermisch endhärtet.

9. Verwendung einer Dispersion nach einem der Ansprüche 1 bis 7 zur Beschichtung von substraten aus Metall, Bolz, Papier, Keramik, Glas, Kunststoff, Textil, Leder, Vlies oder mineralischen Baustoffen.

10. Verwendung einer Dispersion nach einem der Ansprüche 1 bis 7 als oder in Außenbeschichtungen, bevorzugt von Gebäuden oder Gebäudeteilen, Straßenmarkierungen, Beschichtungen auf Fahrzeugen und Flugzeugen.

11. Verwendung nach Anspruch 10 als oder in Automobilklarlack(en).

## Claims

1. A curable aqueous polyurethane dispersion comprising
a) at least one compound having at least two free isocyanate groups, at least one allophanate group and at least one C=C double bond capable of free radical polymerization, a carbonyl group or an oxygen atom in the form of an ether function being bonded directly to the double bond,
b) at least one compound having at least one group reactive toward isocyanate groups and having a C=C double bond capable of free-radical polymerization,
c) if appropriate, at least one compound having at least two groups reactive toward isocyanate groups and selected from hydroxyl, mercapto, primary and/or secondary amino groups,
d) at least one compound having at least one group reactive toward isocyanate groups and having at least one acid group,
e) at least one basic compound for neutralizing or partially neutralizing the acid groups of the compounds d),
f) if appropriate, at least one compound differing from b), d) and e) and having only one group reactive toward isocyanate groups,
g) if appropriate, at least one polyisocyanate differing from a),
h) at least one thermal initiator,
i) if appropriate, further additives which are selected from reactive diluents, photoinitiators and conventional coating additives, and
k) water;
wherein no compounds which comprise isocyanate groups and in which some or all of the isocyanate groups were reacted with blocking agents are used.

2. The dispersion according to claim 1, wherein the component a) is selected from compounds of the formula I 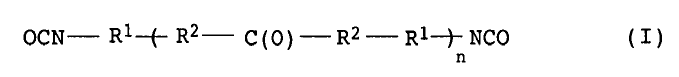 where
n is an integer from 1 to 10,
R¹ is a divalent aliphatic or alicylic C₂- to C₂₀-hydrocarbon unit or an aromatic C₆- to C₂₀-hydrocarbon unit,
R² in each repeating unit is -NH- on the one hand and, on the other hand, 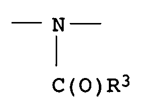 R³ being a radical derived from an alcohol A by abstraction of the H atom from the alcoholic hydroxyl group, the alcohol A additionally having at least one C=C double bond capable of free-radical polymerization and a carbonyl group or an oxygen atom being bonded by an ether bond directly to the double bond.

3. The dispersion according to any of the preceding claims, wherein the thermal initiator h) has a half-life at 60°C of at least one hour.

4. The dispersion according to any of the preceding claims, wherein the component h) comprises at least one compound which has at least one group reactive toward isocyanate groups and is capable of liberating free radicals thermally even after reaction with a compound containing isocyanate groups.

5. The dispersion according to any of the preceding claims, wherein the component h) comprises benzopinacol or a derivative thereof.

6. The dispersion according to any of the preceding claims, wherein the component h) comprises an alkyl (arylsulfonyl)acetate.

7. The dispersion according to any of the preceding claims, wherein the isocyanate groups of the compounds of component a) and, if present, g) are reacted to an extent of
- from 5 to 98, preferably from 10 to 80, mol% with groups of at least one compound of component b) which are reactive toward isocyanate groups,
- from 0 to 70, preferably from 20 to 60, mol% with groups of at least one compound of component c) which are reactive toward isocyanate groups,
- from 2 to 10, preferably from 4 to 8, mol% with groups of at least one compound of component d) which are reactive toward isocyanate groups.

8. A process for coating articles, wherein
i) an article is coated with The dispersion according to any of claims 1 to 7,
ii) volatile components of the dispersion are removed for film formation under conditions under which the thermal initiator h) substantially still forms no free radicals,
iii) if appropriate, the film formed in step ii) is exposed to high-energy radiation, the film being precured, and then, if appropriate, the article coated with the precured film being mechanically processed or the surface of the precured film being brought into contact with another article, and
iv) the film is subjected to thermal final curing.

9. The use of a dispersion according to any of claims 1 to 7 for coating substrates of metal, wood, paper, ceramic, glass, plastics, textile, leather, nonwovens or mineral building materials.

10. The use of a dispersion according to any of claims 1 to 7 as or in exterior coatings, preferably of buildings or parts of buildings, road markings or coatings on vehicles and aircraft.

11. The use according to claim 10 as or in automotive clearcoat(s).

## Revendications

1. Dispersion de polyuréthanne aqueuse, durcissable, à base
a) d'au moins un composé comportant au moins deux groupes isocyanate libres, au moins un groupe allophanate et au moins une double liaison C=C polymérisable par voie radicalaire, un groupe carbonyle ou un atome d'oxygène dans une fonction éther étant directement lié à la double liaison,
b) d'au moins un composé comportant au moins un groupe réactif vis-à-vis des groupes isocyanate et une double liaison C=C polymérisable par voie radicalaire,
c) éventuellement d'au moins un composé comportant au moins deux groupes réactifs vis-à-vis des groupes isocyanate qui sont choisis parmi des groupes hydroxyle, mercapto, amino primaires et/ou secondaires,
d) d'au moins un composé comportant au moins un groupe réactif vis-à-vis des groupes isocyanate et au moins un groupe acide,
e) d'au moins un composé basique pour une neutralisation ou une neutralisation partielle des groupes acide des composés d),
f) éventuellement d'au moins un composé différent de b), d) et e), qui présente uniquement un groupe réactif vis-à-vis des groupes isocyanate,
g) éventuellement d'au moins un polyisocyanate différent de a),
h) d'au moins un amorceur thermique,
i) éventuellement d'autres additifs qui sont choisis parmi des diluants réactifs, des photo-amorceurs et des additifs de vernis courants, et
k) d'eau,
dans laquelle aucun composé contenant des groupes isocyanate, pour lesquels les groupes isocyanate ont été partiellement ou totalement mis à réagir avec des agents de blocage, n'est mis en oeuvre.

2. Dispersion suivant la revendication 1, dans laquelle le composant a) est choisi parmi des composés de la formule générale I : 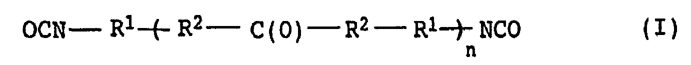 dans laquelle
n est un nombre entier de 1 à 10,
R¹ représente une unité d'hydrocarbure en C₂-C₂₀ alicyclique ou aliphatique divalente ou une unité d'hydrocarbure en C₆-C₂₀ aromatique,
R² représente, dans chaque unité répétitive, une fois -NH- et une fois 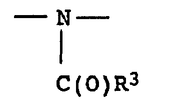 où R³ représente un radical dérivé d'un alcool A par abstraction de l'atome H du groupe hydroxyle alcoolique, l'alcool A présentant en supplément au moins une double liaison C=C polymérisable par voie radicalaire et un groupe carbonyle ou un atome d'oxygène dans une liaison éther étant lié directement sur la double liaison.

3. Dispersion suivant l'une des revendications précédentes, dans laquelle l'amorceur thermique h) présente une demi-vie à 60°C d'au moins 1 heure.

4. Dispersion suivant l'une des revendications précédentes, dans laquelle le composant h) comporte au moins un composé présentant au moins un groupe réactif vis-à-vis des groupes isocyanate, qui, même après réaction avec un composé contenant des groupes isocyanate, est capable de libérer des radicaux par voie thermique.

5. Dispersion suivant l'une des revendications précédentes, dans laquelle le composant h) comporte du benzopinacol ou un dérivé de celui-ci.

6. Dispersion suivant l'une des revendications précédentes, dans laquelle le composant h) comporte un (arylsulfonyl)-acétate d'alkyle.

7. Dispersion suivant l'une des revendications précédentes, dans laquelle les groupes isocyanate des composés du composant a) et, dans le cas où il y en a, g) sont mis à réagir
- pour 5 à 98 % molaires, de préférence 10 à 80 % molaires, avec des groupes réactifs vis-à-vis des groupes isocyanate d'au moins un composé du composant b),
- pour 0 à 70 % molaires, de préférence 20 à 60 % molaires, avec des groupes réactifs vis-à-vis des groupes isocyanate d'au moins un composé du composant c),
- pour 2 à 10 % molaires, de préférence 4 à 8 % molaires, avec des groupes réactifs vis-à-vis des groupes isocyanate d'au moins un composé du composant d).

8. Procédé de revêtement d'objets, dans lequel
i) on revêt un objet par une dispersion suivant l'une des revendications 1 à 7,
ii) on élimine des éléments volatils de la dispersion pour former un film dans des conditions dans lesquelles l'amorceur thermique h) ne forme essentiellement encore aucun radical libre,
iii) on irradie éventuellement le film formé dans l'étape ii) à l'aide d'un rayonnement riche en énergie, le film étant préalablement durci, et ensuite, éventuellement, on traite mécaniquement l'objet revêtu du film préalablement durci ou on met en contact la surface du film préalablement durci avec un autre objet,
iv) on termine le durcissage du film par voie thermique.

9. Utilisation d'une dispersion suivant l'une des revendications 1 à 7, pour le revêtement de substrats en métal, bois, papier, céramique, verre, matière synthétique, matière textile, cuir, non-tissé ou matières de construction minérales.

10. Utilisation d'une dispersion suivant l'une des revendications 1 à 7, comme ou dans des revêtements extérieurs, de préférence de bâtiments ou de parties de bâtiments, de marquages de routes, de revêtements sur des véhicules et des avions.

11. Utilisation suivant la revendication 10, comme ou dans une ou des vernis transparents pour automobile.
